# EUROPEAN PATENT SPECIFICATION

(11) **EP 2 918 653 B1**
(45) Date of publication and mention of the grant of the patent: **14.12.2016**
(21) Application number: 15156927.4
(22) Date of filing: 27.02.2015
(51) Int. Cl.: C09K 5/16

(54) **METHOD OF MANUFACTURING COMPOSITE METAL HALIDE AND CHEMICAL HEAT STORAGE MATERIAL**
VERFAHREN ZUR HERSTELLUNG VON METALLHALOGENID UND CHEMISCHES WÄRMESPEICHERMATERIAL
PROCÉDÉ DE FABRICATION D'UN HALOGÉNURE MÉTALLIQUE COMPOSITE ET MATÉRIAU DE STOCKAGE DE CHALEUR CHIMIQUE

(30) Priority: 14.03.2014 JP 2014050937
(43) Date of publication of application: 16.09.2015
(73) Proprietor: Kabushiki Kaisha Toyota Chuo Kenkyusho, Nagakute-shi, Aichi 480-1192 (JP)
(72) Inventor: Aoki, Masakazu, Nagakute-shi Aichi 480-1192 (JP); Kishida, Yoshihiro, Nagakute-shi Aichi 480-1192 (JP); Yamauchi, Takafumi, Nagakute-shi Aichi 480-1192 (JP); Shimazu, Takashi, Nagakute-shi Aichi 480-1192 (JP)
(74) Representative: Kramer Barske Schmidtchen Patentanwälte PartG mbB

(56) References cited:
- WO-A1-2013/027778
- JP-A- 2007 307 558
- JP-B2- 3 111 667

## Description

### [Technical Field]

The present invention relates to a method of manufacturing a composite metal halide (including ammine complex) suitable for a chemical heat storage material and the like. The present invention relates also to a chemical heat storage material using the composite metal halide.

### [Background Art]

With the raising of environmental awareness, research and development are being actively carried out for saving energy and improving energy efficiency. Some of them focus a chemical heat storage system which uses a chemical heat storage material capable of long term heat storage even without heat-retention because the heat storage density is large. This allows the relatively low temperature waste heat (or exhaust heat), such as generated from engines of cars or other vehicles and various equipment and plants, to effectively be utilized.

The chemical heat storage system transfers a heat medium (such as ammonia and water) between the chemical heat storage material and a heat medium storage material thereby to perform heat storage (become endothermic) and heat release (become exothermic). In order for this system to have high efficiency and to be reduced in size, it is important to achieve a matching in operating temperature and working pressure between the chemical heat storage material and the heat medium storage material. Therefore, a variety of chemical heat storage materials are required which not only have a high heat storage density but can efficiently absorb or release the heat medium under the operating temperature and working pressure that match the heat medium storage material.

As such chemical heat storage materials, in general, there have been conventionally used materials, such as calcium oxide (calcined lime), which react with water to form hydroxide, but recent researches are directed to the use of various metal salts which form ammonia complex (ammine complex) operable within a lower temperature range. One example thereof is disclosed in Non Patent Literature 1 below which describes an alkaline-earth metal halide that becomes exothermic/endothermic by absorbing/releasing of ammonia. On the other hand, Patent Literature 1 below proposes chemical heat storage materials which use not only a single salt (salt comprising one kind of cation and one kind of anion, in particular single metal salt of which the cation is metal ion) but also a double or multiple salt (salt comprising two or more kinds of cations or two or more kinds of anions, in particular multiple metal salt of which the cation or cations are metal ion or ions) in order to expand the operating temperature range and the working pressure range. Non Patent Literature 1 also reports the presence of a double metal salt of Sr and Ca.

### [Citation List]

### [Patent Literature]

[PTL 1]
   WO2013/027778
[PTL 2]
   Japanese Patent No. 3111667
[PTL 3]
   Japanese Examined Patent Application Publication No. 59-25159
[PTL 4]
   JP1-302077A
[PTL 5]
   Japanese Translation of PCT International Application, No. 2007-531209
[PTL 6]
   U. S. Patent No. 5289690

### [Non Patent Literature]

[NPL 1]
   Bull. Chem. Soc. Jpn. 77 (2004) 123
[NPL 2]
   J. Solid State Chemistry 69 (1987) 274

### [Summary of Invention]

### [Technical Problem]

According to Patent Literature 1 or Non Patent Literature 1, a mixture of two or more kinds of single metal salts (such as metal halide hydrate) is heated (fired) at a high temperature of 600 degrees C or higher thereby to generate a new multiple metal salt having a different crystal structure than those of the single metal salts as the raw materials. In such a method, however, the multiple metal salt may have to be generated in a heating furnace or the like which is provided separately from equipment (such as reactor) used in the chemical heat storage system. In addition, when ammonia is used as the heat medium in the chemical heat storage system, it may be necessary to treat the multiple metal salt obtained in such a manner under a low humidity environment before the reactor or the like is filled (charged) with the multiple metal salt, or to perform separately dehydration process after the filling.

Patent Literature 2 describes a calcium salt mixture obtained by dissolving, condensing and drying CaCl₂ and CaBr₂, but does not explicitly disclose the crystal structure, the action and other properties of the calcium salt mixture. Patent Literature 3 describes that an appropriate amount of sodium chloride (NaCl) and/or potassium chloride (KCl) is mixed into zinc chloride (ZnCl₂) in a molten state thereby to allow the ZnCl₂, which reacts with NH₃, to have a reduced vapor pressure and melting temperature. However, the NaCl and KCl in this case are used merely for the purpose of stabilizing the molten ZnCl₂ which absorbs/releases NH₃. Thus, Patent Literature 3 is not to provide a chemical heat storage material that comprises a multiple metal salt. Patent Literatures 4 to 6 disclose chemical heat storage systems and the like, and exemplify metal halides as examples of a chemical heat storage material to be used, but nothing therein describes specific features of the chemical heat storage material itself.
JP 2007-307558 A relates to a method for separating ammonia using metal halides, wherein ammonia-containing gases are brought into contact with a mixture of calcium chloride and calcium bromide under a pressure permitting absorption of ammonia to absorb ammonia, and the pressure is reduced to separate ammonia.

The present invention has been created in view of such circumstances, and an object of the present invention is to provide a method of manufacturing a composite metal halide which method can simply and efficiently manufacture a composite metal halide (multiple metal salt) that has a different structure than those of base metal halides (metal salts, in particular single metal salts) or the mixture thereof within a relatively low temperature range without heating them to a high temperature or other additional treatment. Another object of the present invention is to provide a chemical heat storage material using the composite metal halide.

### [Solution to Problem]

As a result of intensive studies to achieve the above objects and repeating trial and error, the present inventors have newly found that, by contacting ammonia with a mixture powder of two or more kinds of metal halides (single metal salts), a complex metal halide can be relatively easily generated such that a plurality of kinds of metal elements and one kind or a plurality of kinds of halogen elements are combined, wherein the mixture powder has a particle size of 300 micrometers or less. Developing this achievement, the present invention has been accomplished as will be described hereinafter.

### «Method of manufacturing composite metal halide»

(1) According to an aspect of the present invention, there is provided a method of manufacturing a composite metal halide. This method comprises a supply step of supplying ammonia into a container. The container accommodates a mixture powder or a molded body of the mixture powder. The mixture powder comprises two or more kinds of metal halide raw materials of which metal elements and optionally halogen elements are different. The method is characterized in that a complex metal halide is generated such that a plurality of kinds of metal elements and one kind or a plurality of kinds of halogen elements contained in the mixture powder are combined, wherein the mixture powder has a particle size of 300 micrometers or less.
(2) First of all, the composite metal halide according to the present invention is configured such that a plurality of kinds of metal elements and one kind or a plurality of kinds of halogen elements are combined (ionically bonded) at an atomic level (this configuration may also be referred to as a "multiple metal salt") rather than being a mere mixture of metal halides each configured such that one kind of metal ion (cation) and one kind of halogen ion (anion) are ionically bonded (this configuration may also be referred to as a "single metal salt"). This multiple metal salt exhibits a variety of properties different from those of single metal salts or a mixture thereof (mixed metal salts). For example, not only the crystal structure is different, but also the equilibrium pressure at which the heat medium absorption/release reaction occurs when the multiple metal salt is used as a chemical heat storage material, the change in coordination number at the time of the reaction, and other properties, are different from those of single metal salts or mixed metal salts to be the raw materials. Therefore, by using a multiple metal salt in which the ratio (combining ratio) of two or more metal salts to be the raw materials (which may also be referred to as "metal salt raw materials") is adjusted, it is possible to operate a chemical heat storage system within an operation range which would not be obtained merely by the metal salt raw materials or the mixture thereof.
   According to the manufacturing method of the present invention, such a multiple metal salt can be efficiently obtained within a relatively low temperature range without heating the metal salt raw materials to a high temperature or other additional treatment as in the prior art. In particular, when the multiple metal salt is used as a chemical heat storage material which employs ammonia (NH₃) as the heat medium, the multiple metal salt can be obtained by performing the above-described supply step while in a state where a reactor (container) is filled with (accommodates) a mixture powder of the metal salt raw materials or a molded body and the like. In other words, it is possible to manufacture the multiple metal salt and therefore the chemical heat storage material at a low cost while facilitating effective use of a part of the chemical heat storage system or a part of the manufacturing facility. Moreover, in this case, since the multiple metal salt can be generated while being enclosed in the reactor, a special low-humidity environment is not required to be prepared for the manufacturing and the handling, and the multiple metal salt (chemical heat storage material) can thus be manufactured efficiently at a low cost.
   Unless otherwise stated, the metal halide as referred to in the present description (also referred simply to as a "metal salt") is not limited to the presence or absence of ligand. The metal salt can be in a form of a hydrate, an ammine complex or an anhydride (with no ligand) depending on the atmosphere in which the metal salt is present and the generation process. The multiple metal salt according to the present invention may ordinarily be in a form of an ammine complex when the ammonia is not discharged and removed or other treatment is not performed. Such an ammine complex is excellent in the handling ability, storage ability and other appropriate properties because the ammine complex is less likely to change into a hydrate than an anhydride, thus being stable.
   According to the manufacturing method of the present invention, even when the metal salt raw materials are hydrates, a multiple metal salt ammine complex can be obtained through the above-described supply step for ammonia such that the ligand of H₂O is substituted with NH₃ without taking a time to change the hydrates into anhydrous metal salts or the like. That is, the manufacturing method of the present invention is very efficient because it is possible to concurrently perform the dehydration of the metal salt hydrates contained in the raw materials and the generation of the multiple metal salt ammine complex.
   In this case, to discharge H₂O generated due to substitution with NH₃ outside the system, it is preferred that a discharge step is provided to discharge the ammonia gas from the container after the supply step. It is also preferred that the discharge step and the above-described supply step are performed repeatedly. As will be understood, when the metal halide raw materials comprise a metal halide hydrate, it is preferred that a dehydration step is provided to heat the mixture powder in a vacuum atmosphere or in an inert gas atmosphere thereby to reduce the hydration number of the metal halide hydrate. It is more preferred that the dehydration step is a pretreatment step to be performed before the supply step.
(3) Although the reason is not necessarily sure that the multiple metal salt is obtained by supplying ammonia to the mixture powder or the like of two or more kinds of metal salt raw materials according to the manufacturing method of the present invention, it may be considered under present circumstances as below.

First, when ammonia is supplied to the mixture of two or more kinds of metal salt raw materials, the multiple metal salt ammine complex is more likely to be thermodynamically stable than a mixed state of ammine complexes of respective metal salt raw materials. Next, when ammonia is introduced to respective metal salt raw materials to generate ammine complexes, diffusion of metal ions and halogen ions that have constituted the metal salt raw materials is facilitated. Furthermore, according to the manufacturing method of the present invention, there is obtained a state in which the two or more kinds of metal salt raw materials are in contact with one another in a form of fine particles, so that the contact area between the particles is large. Therefore, the introduction of ammonia causes a situation in which different kinds of metal ions or halogen ions readily diffuse to one another, and the diffusion distance required for them to be close to one another is also small. It thus appears that such circumstances synergistically act to allow the multiple metal salt to be obtained efficiently according to the manufacturing method of the present invention within a relatively low temperature range, including the room temperature range, without increasing the ammonia pressure too much.

In view of the above-described circumstances, it is preferred that the metal salt raw materials are constituted of fine particles. More specifically, it is preferred that the mixture powder according to the present invention has a particle size of 300 micrometers or less in an embodiment, or 250 micrometers or less in another embodiment, or 200 micrometers or less in a further embodiment, for example. Unless otherwise state, the particle size as referred to in the present description is specified by sieve classification. For example, powder comprising particles having passed through a sieve of a nominal mesh size of "a" micrometers is to have a particle size of "a" micrometers or less (also represented simply by "-a micrometers"). Note that the classification using sieves is in accordance with JIS Z 8801.

### «Method of manufacturing chemical heat storage material»

The present invention can be perceived not only as the above-described method of manufacturing the multiple metal salt but also as a method of manufacturing a chemical heat storage material comprising the multiple metal salt. In this case, as previously described, it is preferred that the container according to the present invention is a reactor that accommodates the chemical heat storage material which becomes exothermic or endothermic by absorbing or releasing of ammonia. The present invention can further be perceived as the chemical heat storage material itself which is obtained through such a manufacturing method and which becomes exothermic or endothermic by absorbing or releasing of ammonia as a heat medium.

### «Others»

(1) The manufacturing method of the present invention may comprise a purification step of obtaining an anhydrous multiple metal salt in which NH₃ is removed such as by further heating the multiple metal salt ammine complex and/or evacuation. The heating in this case may be performed at 50 to 350 degrees C in vacuum or in an inert gas, for example, depending on the kind of the metal salt. Even after such heating, the multiple metal salt itself is unlikely to decompose.
(2) The chemical heat storage material according to the present invention may comprise a multiple metal salt or two or more multiple metal salts, or may also be configured such that one or more multiple metal salts and one or more single metal salts are mixed. By using a chemical heat storage material in which two or more kinds of metal salts are compounded, optimization may be more easy such as in the matching with the heat medium storage material, the equilibrium region of the heat medium absorption/release reaction, and the change in coordination number of the heat medium.
(3) Unless otherwise stated, a numerical range "x to y" as referred to herein includes the lower limit value x and the upper limit value y. Various numerical values or any numerical value included in numerical ranges described herein may be appropriately selected or extracted as a new lower limit value or upper limit value, and any numerical range such as "a to b" may thereby be newly and freely provided using such a new lower limit value or upper limit value.

### [Brief Description of Drawings]

[Fig. 1]

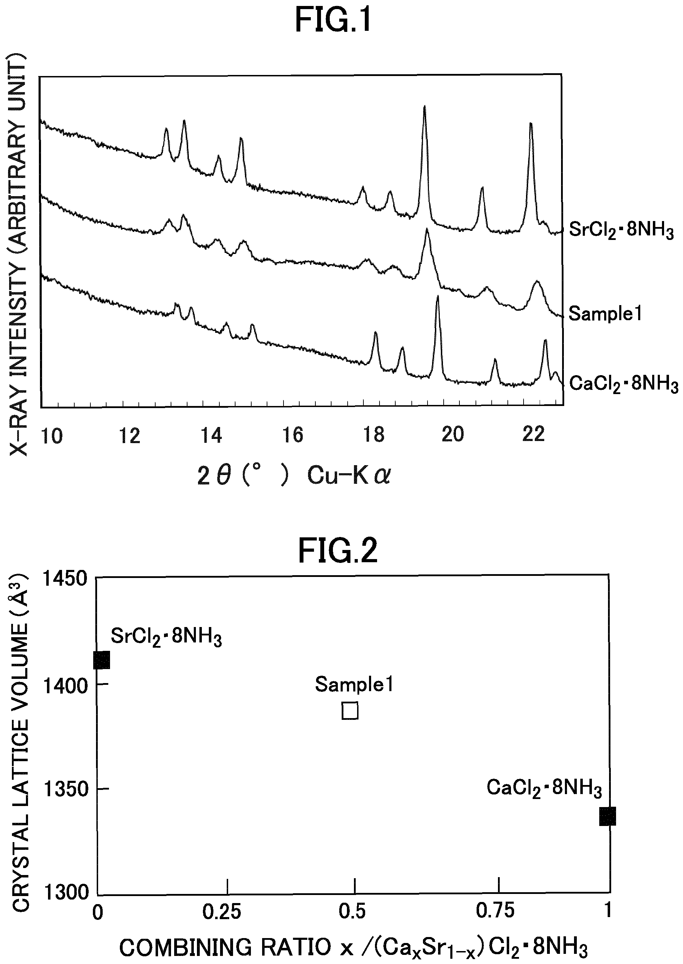

   Fig. 1 is a graph illustrating an X-ray diffraction pattern according to Sample 1.
[Fig. 2]
   Fig. 2 is a diagram illustrating a relationship between a crystal lattice volume and a combining ratio according to Sample 1.
[Fig. 3]

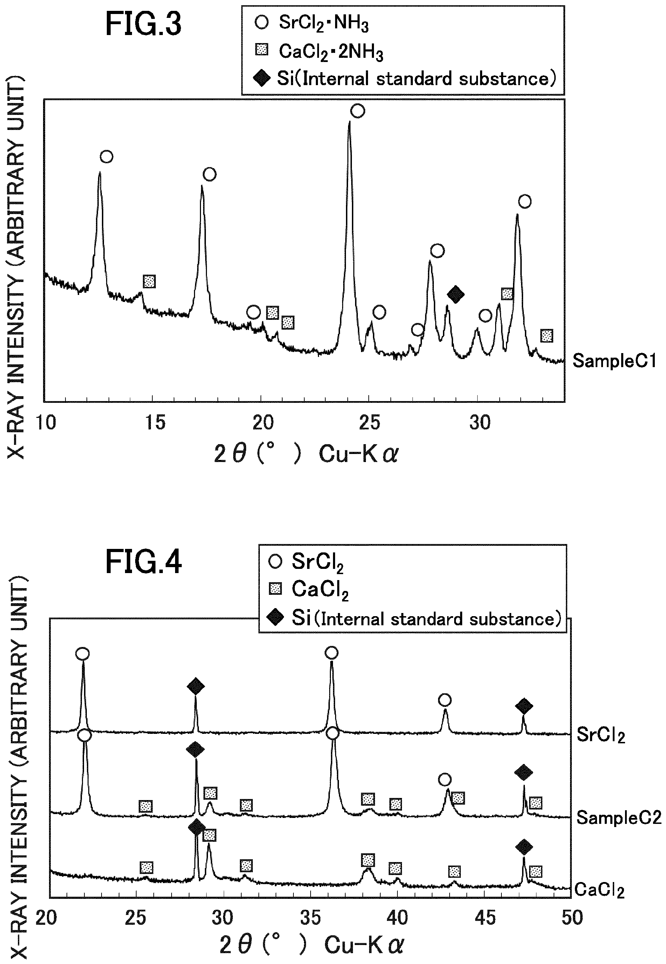

   Fig. 3 is a graph illustrating an X-ray diffraction pattern according to Sample C1.
[Fig. 4]
   Fig. 4 is a graph illustrating an X-ray diffraction pattern according to Sample C2.

### [Description of Embodiments]

The present invention will be described in more detail with reference to embodiments of the invention. One or more contents freely selected from the description herein may be added as the above-described features of the present invention. The contents described herein may be applied not only to the method of manufacturing the multiple metal salt (including the chemical heat storage material) but also to the resulted product, i.e., the multiple metal salt or the chemical heat storage material using the same. Features regarding the manufacturing method, when understood as product-by-process, may also be features regarding a product. Which embodiment is the best or not is different in accordance with objectives, required performance and other factors.

### «Metal salt»

(1) The metal salt (metal halide) according to the present invention is a compound configured such that a metal ion (cation) and a halogen ion (anion) are ionically bonded. Typical examples of the metal element (M) include alkali metals (such as Li, Na and K), alkaline-earth metals (such as Mg, Ca and Sr), and transition metals (such as Mn, Fe, Co and Ni). Examples of the halogen element (X) include Cl, Br, and I.
(2) The multiple metal salt is represented by MXₙ (M: metal element, X: halogen element, n: average valence number of M), and M and optionally X comprises two or more kinds of elements. The average valence number (n) of M as used herein refers to an average value of ion valence numbers when the two or more metal elements become respective metal ions. For example, in the case of a multiple metal salt (M1ₓM2₁₋ₓXₙ) according to the present invention that comprises two kinds of metal elements (M1 and M2) and one kind of halogen element (X), we obtain n=m1×x+m2×(1-x), where ml represents the ion valence number of M1, m2 represents the ion valence number of M2, and x (0<x<1) represents the ratio of the number of atoms of M1 to the total number of atoms of the metal elements (combining ratio).
   The multiple metal salt may also comprise a plurality of halogen elements. The ion valence number of any halogen element is -1 in general, and hence, a multiple metal salt according to the present invention that comprises two kinds of metal elements (M1 and M2) and two kinds of halogen elements (X1 and X2) may be expressed as M1ₓM2₁₋ₓ(X1_{y}X2_{1-y})ₙ (n: ion valence number of M), where y (0<y<1) represents the ratio of the number of atoms of X1 to the total number of atoms of the halogen elements (combining ratio).
   The multiple metal salt may take various crystal structures depending on the constituent elements. For example, the multiple metal salt may have a crystal structure, such as CaF₂-type, SrI₂-type, CaCl₂-type, SrBr₂-type, PbCl₂-type, CdCl₂-type or CdI₂-type crystal structure. The crystal structure of the multiple metal salt is not limited. The crystal structure may be different from those of the base single metal salts, or may otherwise be the same therewith. Note, however, that the crystal lattice volume of the multiplex metal salt has a different value from those of the single metal salts even in the case of the same crystal structures. This allows the multiple metal salt to develop different properties (such as the equilibrium pressure and the change in coordination number) from those of the single metal salts.
(3) The metal salt raw materials may ordinarily be single metal salts each configured such that one kind of metal ion and one kind of halogen ion are bonded, but one or more kinds of the metal salt raw materials may be multiple metal salts. According to the present invention, ammonia may be supplied to the mixture powder, in which two or more kinds of powder-like metal salt raw materials are mixed, or to the molded body of the mixture powder. In this operation, it is preferred that the particle size of the metal salt raw materials or the mixture powder is not larger than a predetermined value.
(4) When the metal salt raw materials are hydrates or the multiple metal salt is an ammine complex, the coordination number of H₂O or NH₃ is not limited, but may change within a range of 0 to 8. When the multiple metal salt is used as a chemical heat storage material, it is preferred that the coordination number of the heat medium changes rapidly in a certain operating region because in this case the heat storage density that can match the heat medium storage material becomes high. In this respect, the multiple metal salt may preferably be such that the coordination number of the heat medium changes by at least 4 or more in an embodiment, or 5 or more in another embodiment, or 6 or more in a further embodiment, around (before and after) an equilibrium region where the heat medium absorption/release reaction for absorbing or releasing the heat medium becomes an equilibrium state.
(5) Typical example of the metal salt according to the present invention is an alkaline-earth metal halide. Examples of such metal salt raw materials include CaX₂·pH₂O (p: 0 to 6), SrX₂·qH₂O (q: 0 to 6), and MgX₂·rH₂O (r: 0 to 8). These metal salt raw materials can be used to obtain a multiple metal salt, such as CaxSr₁₋ₓX₂·sNH₃ (0<x<1, 0≤s≤8), for example.

### «Method of manufacturing»

### (1) Supply step

The supply step according to the present invention is a step of contacting ammonia with the metal salt raw materials to obtain the multiple metal salt (in particular, the ammine complex thereof). The method of contacting the metal salt raw materials and the ammonia is not limited. The mixture powder of the metal salt raw materials or the molded body thereof may be disposed under an environment in which ammonia is enclosed, or may also be disposed under an environment in which ammonia flows.

The temperature, pressure, flow rate and other relevant factors of ammonia to be supplied are not limited, but if the temperature or pressure is unduly low, the diffusion/introduction of ammonia is not facilitated, so that the multiple metal salt cannot be efficiently generated. On the other hand, unduly high temperature or pressure requires large equipment and the like, which may be undesirable. In this regard, the supply step may preferably be a step of making an ammonia gas atmosphere in the container of 5 to 350 degrees C in an embodiment, or 10 to 300 degrees C in another embodiment, and 10 to 600 kPa in an embodiment, or 100 to 550 kPa in another embodiment, or 150 to 500 kPa in a further embodiment.

In the process to generate the multiple metal salt, ammonia gas containing water vapor is generated from the metal salt raw materials. This ammonia gas may preferably be utilized after dehumidification. Dehumidification of ammonia gas may be performed using a dewatering agent (dehumidifying agent, desiccant) comprising zeolite, silica-gel, calcium oxide, calcium chloride or the like.

### (2) Molding step

When the supply step is performed for a molded body of the metal salt raw materials, the manufacturing method of the present invention may preferably comprise a step of obtaining the molded body in which the mixture powder comprising two or more kinds of metal salt raw materials is pressurized and molded. The molding pressure may be 20 MPa or more in an embodiment, or 40 MPa or more in another embodiment, for example. If the molding pressure is unduly low, the contact between particles of the two or more metal salt raw materials will be insufficient, and the diffusion of the constituent elements (ions) to one another cannot sufficiently be facilitated. The upper limit of the molding pressure is not limited, but the productivity may be improved if the upper limit is 300 MPa or less in an embodiment, or 150 MPa or less in another embodiment. To avoid the deliquescence of the metal salt raw materials, it is preferred that the molding step is performed under a low humidity environment in which the water concentration is 0.3% or less in an embodiment, or 100 ppm or less in another embodiment, or 10 ppm or less in still another embodiment, or 1 ppm or less in a further embodiment.

### «Others»

(1) Prior to the supply step, a pretreatment step may be performed for preliminarily heating the metal salt raw materials in a vacuum atmosphere or in an inert gas atmosphere to reduce the hydration number of the metal salt raw materials. This allows the multiple metal salt to be efficiently generated. The pretreatment step may be any of a step of completely removing H₂O from the metal salt raw materials and a step of reducing the hydration number.
(2) The molded body of the metal salt raw materials to be provided for the supply step is not limited in its form, but may preferably be in a form of being accommodated in a container such as a reactor if the multiple metal salt is used for a chemical heat storage material. Such a molded body may consist only of the metal salt raw materials, but may also contain a binder (such as silicate salt and low-melting-point glass), a highly thermal-conductive material (such as carbon fiber and ceramics) and the like. When the metal salt raw materials are likely to deliquesce, it is preferred that the formation and storage thereof and other necessary procedures are performed under an appropriate low-humidity environment.

### [Examples]

### «Sample 1»

### (1) Manufacturing

As the metal salt raw materials, powder of hydrate of calcium chloride (CaCl₂·2H₂O) (C5080 available from Sigma-Aldrich Co. LLC.) and powder of hydrate of strontium chloride (SrCl₂·6H₂O) (197-04185 available from Wako Pure Chemical Industries, Ltd.) both being alkaline-earth metal chlorides were prepared.

Each powder was classified by sieving into a particle size of -212 micrometers, and the powders were weighed and mixed to have a molar ratio of 1:1 (mixing step). During this operation, the classifying, weighing and mixing of the powders were performed under a low-humidity environment of a water concentration: 0.1 % or less.

The mixture powder thus obtained was filled into a chamber (container) for in-situ X-ray diffraction measurement (filling step). The mixture powder was heated to 180 degrees C while the chamber sealed was evacuated to vacuum of 10 Pa or less (pretreatment step, dehydration step). Thereafter, ammonia gas was supplied into the chamber until the chamber inner pressure became 200 kPa at the room temperature (supply step).

### (2) Measurement

The powder after supply of ammonia gas (Sample 1) was measured using X-ray diffraction. The obtained X-ray diffraction pattern is illustrated in Fig. 1. In addition, the crystal lattice volume calculated based on the profile of the X-ray diffraction pattern is illustrated in Fig. 2. Fig. 1 and Fig. 2 also illustrate the X-ray diffraction patterns and the crystal lattice volumes of CaCl₂·8NH₃ and SrCl₂·8NH₃ which are possible ammine complexes of the metal salt raw materials.

### (3) Evaluation

As found from Fig. 1, the profile of Sample 1 is similar to the profile of CaCl₂·8NH₃ or SrCl₂·8NH₃, but the diffraction peak positions are apparently different from those of CaCl₂·8NH₃ and SrCl₂·8NH₃. As also found from Fig. 2, the crystal lattice volume of Sample 1 is an intermediate value between those of CaCl₂·8NH₃ and SrCl₂·8NH₃.

From the above, it can be said that Sample 1 is not a mixture of CaCl₂·8NH₃ and SrCl₂·8NH₃, but is Ca_{0.5}Sr_{0.5}Cl₂·8NH₃ which is an ammine complex of multiple alkaline-earth metal chloride in which CaCl₂·8NH₃ and SrCl₂·8NH₃ are combined. It has thus been confirmed that the mixture powder of single metal salts of different metal elements is contacted with ammonia thereby to generate a new multiple metal salt.

### «Sample 2» (provided for comparative purposes only)

### (1) Manufacturing

As the metal salt raw materials, powder of anhydride of magnesium bromide (MgBr₂) (360074 available from Sigma-Aldrich Co. LLC.) and powder of anhydride of magnesium iodide (MgI₂) (394599 available from Sigma-Aldrich Co. LLC.) both being alkaline-earth metal halides were prepared.

Each powder was classified by sieving into a particle size of -212 micrometers, and the powders were weighed and mixed to have a molar ratio of 1:1 (mixing step). The mixture powder thus obtained was further subjected to press molding at the room temperature, and a molded body (15×15×2 mm) was obtained. The classifying, weighing, mixing and molding of the powders were performed under a low-humidity environment of a water concentration: 1 ppm or less using a glove box.

Under this low-humidity environment, the molded body was charged into a reactor to be used in a chemical heat storage system (filling step). Thereafter, ammonia gas was supplied into the reactor until the inner pressure became 200 kPa at the room temperature (supply step). Subsequently, the reactor was heated to 250 degrees C and held for 3 hours with the inner pressure of 550 kPa. The reactor was then cooled to the room temperature and evacuated to vacuum.

### (2) Measurement/Evaluation

The molded body was put out from the reactor and crushed to powder again for X-ray diffraction measurement. As with the case of Sample 1, the profile of Sample 2 is similar to the profile of MgBr₂·6NH₃ or MgI₂·6NH₃ which is a possible ammine complex of each metal salt raw material, but the diffraction peak positions are apparently different from those of MgBr₂·6NH₃ and MgI₂·6NH₃. In addition, the crystal lattice volume of Sample 2 is an intermediate value between those of MgBr₂·6NH3 and MgI₂·6NH₃.

From the above, it can be said that Sample 2 is not a mixture of MgBr₂·6NH₃ and MgI₂·6NH3, but is MgBrI·6NH3 which is an ammine complex of an alkaline-earth metal halide in which MgBr₂·6NH₃ and MgI₂·6NH₃ are combined. It has thus been confirmed that the mixture powder of single metal salts of different halogen elements is contacted with ammonia thereby to generate a new multiple metal salt.

### «Sample C1»

### (1) Manufacturing

As the metal salt raw materials, powder of CaCl₂·2H₂O and powder of SrCl₂·6H₂O as used in Sample 1 were prepared. These powders were weighed and mixed to have a molar ratio of 1:1 in the obtained state without sieve classification. The weighing and mixing of the powders were performed under the previously-described low-humidity environment.

The obtained mixture powder was filled into the previously-described chamber (container), and ammonia gas was supplied into the chamber until the chamber inner pressure became 200 kPa at the room temperature. The chamber was then heated to 70 degrees C and held for 2 hours.

### (2) Measurement and evaluation

The powder thus obtained (Sample C1) was measured using in-situ X-ray diffraction. The obtained X-ray diffraction pattern is illustrated in Fig. 3. As found from Fig. 3, the diffraction peaks of Sample C1 are coincident with those of CaCl₂·2NH₃ and SrCl₂·NH₃ which are possible ammine complexes of the metal salt raw materials. It has therefore been confirmed that Sample C1 is a mixture of CaCl₂·2NH₃ and SrCl₂·NH₃ and a different multiple metal salt than those is hardly generated. It has thus been found that a multiple metal salt is unlikely to be generated when the ammonia is supplied to coarse mixture powder comprising the metal salt raw materials which are not classified by sieving.

### «Sample C2»

### (1) Manufacturing

As the metal salt raw materials, powder of CaCl₂·2H₂O and powder of SrCl₂·6H₂O as used in Sample 1 were prepared. Each of these powders was classified by sieving as with the case of Sample 1, and the powders were weighed and mixed to have a molar ratio of 1:1. The weighing and mixing of the powders were performed under the previously-described low-humidity environment. The obtained mixture powder was filled into the above-described chamber, and then heated to 180 degrees C while being evacuated to vacuum.

### (2) Measurement and evaluation

The powder thus obtained (Sample C2) was measured using X-ray diffraction. The obtained X-ray diffraction pattern is illustrated in Fig. 4. As found from Fig. 4, the diffraction peaks of Sample C2 are coincident with those of CaCl₂ and SrCl₂ which are obtained by dehydration of the metal salt raw materials as hydrates. It has therefore been confirmed that Sample C2 is a mixture of CaCl₂ and SrCl₂ and is not a multiple metal salt thereof. In other words, it has been confirmed that a multiple metal salt is not generated even if the mixture powder of two or more kinds of single metal salts is merely heated to a relatively low temperature.

For reference, a powder (Sample C2') was obtained by further heating Sample C2 at 600 degrees C in vacuum, and X-ray diffraction measurement was also performed. It has been confirmed in this case that an X-ray diffraction pattern is obtained having diffraction peaks that are coincident with those of Ca_{0.5}Sr_{0.5}Cl₂ rather than those of CaCl₂ and SrCl₂. This has revealed that, if ammonia is not used, heating at a high temperature is required for a multiple metal salt to be obtained from two or more kinds of single metal salts.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method of manufacturing a composite metal halide, the method comprising a supply step of supplying ammonia into a container, the container accommodating a mixture powder or a molded body of the mixture powder, the mixture powder comprising two or more kinds of metal halide raw materials of which metal elements and optionally halogen elements are different,
wherein a complex metal halide is generated such that a plurality of kinds of metal elements and one kind or a plurality of kinds of halogen elements contained in the mixture powder are combined, and
wherein the mixture powder has a particle size of 300 micrometers or less.

2. The method of manufacturing a composite metal halide as recited in claim 1, wherein the metal halide raw materials comprise an alkaline-earth metal halide.

3. The method of manufacturing a composite metal halide as recited in claim 1 or 2, wherein the composite metal halide is an ammine complex.

4. The method of manufacturing a composite metal halide as recited in any one of claims 1 to 3, wherein the supply step is a step of making an ammonia gas atmosphere of 5 to 350 degrees C and 10 to 600 kPa in the container.

5. The method of manufacturing a composite metal halide as recited in any one of claims 1 to 4, further comprising a discharge step of discharging ammonia from the container after the supply step, wherein
the supply step and the discharge step are performed repeatedly.

6. The method of manufacturing a composite metal halide as recited in any one of claims 1 to 5, wherein the metal halide raw materials comprises a metal halide hydrate,
the method further comprising a dehydration step of heating the mixture powder in a vacuum atmosphere or in an inert gas atmosphere thereby to reduce a hydration number of the metal halide hydrate.

7. A chemical heat storage material comprising the composite metal halide obtained by the method of manufacturing as recited in any one of claims 1 to 6, the chemical heat storage material becoming exothermic or endothermic by absorbing or releasing of ammonia as a heat medium.

## Patentansprüche

1. Verfahren zur Herstellung eines gemischten Metallhalogenids, wobei das Verfahren einen Zuführungsschritt des Zuführens von Ammoniak in einen Behälter umfasst, wobei der Behälter ein gemischtes Pulver oder einen Formkörper des gemischten Pulvers enthält, wobei das gemischte Pulver zwei oder mehr Arten von Metallhalogenid-Ausgangsmaterialien umfasst, deren Metallelemente und gegebenenfalls Halogenelemente verschieden sind,
wobei ein komplexes Metallhalogenid derart erzeugt wird, dass eine Mehrzahl von Arten von Metallelementen und eine Art oder eine Mehrzahl von Arten von Halogenelementen, die in dem gemischten Pulver enthalten sind, vereinigt werden, und
wobei das gemischte Pulver eine Teilchengröße von 300 Mikrometer oder weniger aufweist.

2. Verfahren zur Herstellung eines gemischten Metallhalogenids nach Anspruch 1, bei dem die Metallhalogenid-Ausgangsmaterialien ein Erdalkalimetallhalogenid umfassen.

3. Verfahren zur Herstellung eines gemischten Metallhalogenids nach Anspruch 1 oder 2, bei dem das gemischte Metallhalogenid ein Amminkomplex ist.

4. Verfahren zur Herstellung eines gemischten Metallhalogenids nach einem der Ansprüche 1 bis 3, bei dem der Zuführungsschritt ein Schritt des Bereitstellens einer Ammoniakgasatmosphäre von 5 bis 350 °C und 10 bis 600 kPa in dem Behälter ist.

5. Verfahren zur Herstellung eines gemischten Metallhalogenids nach einem der Ansprüche 1 bis 4, das ferner einen Austragschritt des Austragens von Ammoniak aus dem Behälter nach dem Zuführungsschritt umfasst, wobei der Zuführungsschritt und der Austragschritt wiederholt durchgeführt werden.

6. Verfahren zur Herstellung eines gemischten Metallhalogenids nach einem der Ansprüche 1 bis 5, bei dem die Metallhalogenid-Ausgangsmaterialien ein Metallhalogenidhydrat umfassen, wobei das Verfahren ferner einen Dehydratisierungsschritt des Erwärmens des gemischten Pulvers in einer Vakuumatmosphäre oder in einer Inertgasatmosphäre umfasst, wodurch die Hydratationszahl des Metallhalogenidhydrats vermindert wird.

7. Chemisches Wärmespeichermaterial, welches das gemischte Metallhalogenid umfasst, das durch das Herstellungsverfahren nach einem der Ansprüche 1 bis 6 erhalten worden ist, wobei das chemische Wärmespeichermaterial durch Absorbieren oder Freisetzen von Ammoniak als Wärmemedium exotherm oder endotherm wird.

## Revendications

1. Procédé de fabrication d'un halogénure de métal composite, le procédé comprenant une étape de fourniture consistant à fournir de l'ammoniac dans un contenant, le contenant accueillant une poudre de mélange ou un corps moulé de la poudre de mélange, la poudre de mélange comprenant deux ou plus de deux types de matières premières halogénures de métal dont des éléments métaux et facultativement des éléments halogènes sont différents,
dans lequel un halogénure de métal complexe est généré, de sorte qu'une pluralité de types d'éléments métaux et un type ou une pluralité de types d'éléments halogènes contenus dans la poudre de mélange soient combinés, et dans lequel la poudre de mélange a une taille de particules de 300 micromètres ou moins.

2. Procédé de fabrication d'un halogénure de métal composite selon la revendication 1, dans lequel les matières premières halogénures de métal comprennent un halogénure de métal alcalinoterreux.

3. Procédé de fabrication d'un halogénure de métal composite selon la revendication 1 ou 2, dans lequel l'halogénure de métal composite est un complexe amine.

4. Procédé de fabrication d'un halogénure de métal composite selon l'une quelconque des revendications 1 à 3, dans lequel l'étape de fourniture est une étape consistant à réaliser une atmosphère de gaz ammoniac de 5 à 350 degrés C et de 10 à 600 kPa dans le contenant.

5. Procédé de fabrication d'un halogénure de métal composite selon l'une quelconque des revendications 1 à 4, comprenant en outre une étape d'évacuation consistant à évacuer l'ammoniac du contenant après l'étape de fourniture, dans lequel
l'étape de fourniture et l'étape d'évacuation sont réalisées de façon répétitive.

6. Procédé de fabrication d'un halogénure de métal composite selon l'une quelconque des revendications 1 à 5, dans lequel les matières premières halogénures de métal comprennent un hydrate d'halogénure de métal, le procédé comprenant en outre une étape de déshydratation consistant à chauffer la poudre de mélange dans une atmosphère de vide ou dans une atmosphère de gaz inerte pour réduire ainsi un indice d'hydratation de l'hydrate d'halogénure de métal.

7. Matériau de stockage de chaleur chimique comprenant l'halogénure de métal composite obtenu par le procédé de fabrication tel qu'indiqué dans l'une quelconque des revendications 1 à 6, le matériau de stockage de chaleur chimique devenant exothermique ou endothermique en absorbant ou en dégageant de l'ammoniac en tant que milieu de chaleur.
